# EUROPEAN PATENT SPECIFICATION

(11) **EP 2 738 576 B1**
(45) Date of publication and mention of the grant of the patent: **03.02.2016**
(21) Application number: 13194586.7
(22) Date of filing: 27.11.2013
(51) Int. Cl.: G01V 1/38, B63B 21/66, B63B 22/04

(54) **Head-float and method**
Kopfschwimmkörper und Verfahren
Flotteur de tête et procédé

(30) Priority: 30.11.2012 FR 1261469
(43) Date of publication of application: 04.06.2014
(73) Proprietor: CGG Services SA, 91300 Massy (FR)
(72) Inventor: Tonchia, Hélène, 91300 Massy (FR)
(74) Representative: Petit, Maxime

(56) References cited:
- EP-A1- 2 343 575
- EP-A2- 2 166 381
- WO-A1-00/55649
- WO-A2-03/100451
- US-A- 6 011 753
- US-A1- 2006 227 658

## Description

### BACKGROUND

### TECHNICAL FIELD

Embodiments of the subject matter disclosed herein generally relate to methods and systems and, more particularly, to mechanisms and techniques for improving and making more efficient a maintenance task associated with a head-buoy.

### DISCUSSION OF THE BACKGROUND

Seismic data acquisition and processing generate a profile (image) of geophysical structures under seafloor or subsoil. While this profile does not provide an accurate location for oil and gas reservoirs, it suggests, to those trained in the field, the presence or absence of them. Thus, providing a high-resolution image of the structures under the seafloor/subsoil is an ongoing process.

To construct images of the subsoil (or subsurface), geologists or geophysicists conventionally use, for example, wave emitters (sources) placed on the surface. For the case of marine seismic surveys, the wave emitters are towed by a vessel at or under the surface of the water. Such emitters emit waves (e.g., acoustic waves) which propagate through the water (and subsoil for the land seismic) and which are reflected on the surfaces of the various layers thereof (reflectors). Waves reflected to the surface are recorded as a function of time by receivers (which are towed by the same vessel or another vessel for the marine seismic or lay on the ocean bottom). The signals received and recorded by the receivers are known as seismic traces. Based on the seismic traces, an image of the surveyed subsurface is generated. EP 2343575 A1 discloses a connection system between a head-buoy and a steerable emitter array.

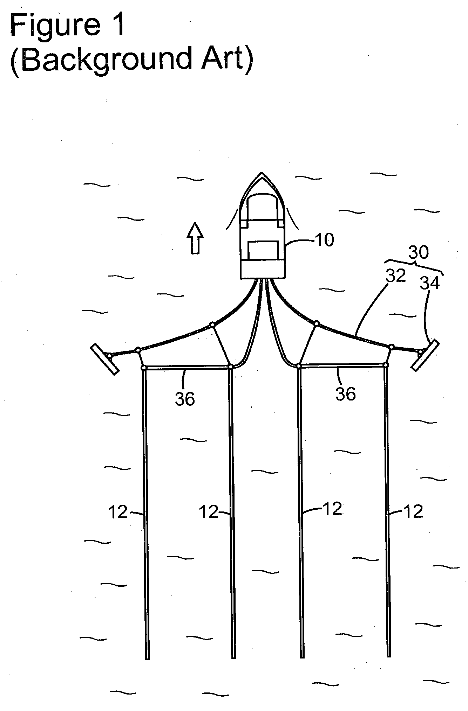

When performing a marine seismic survey, the receivers are placed along a cable to form a streamer, and plural streamers are towed by a vessel. Such a marine seismic survey having a towing vessel 10 is shown in Figure 1. Streamers 12 are shown in Figure 1 spreading over a predetermined area. This is called the seismic spread. In order to maintain the plural streamers 12 substantially parallel with each other, various front-end gears are used. Streamers 12 are spread out to a desired width to provide measurements of the geological conditions over an acquisition area.

An example of a front-end gear 30 is provided between the vessel 10 and the various streamers 12, and this gear is configured to achieve the desired positioning for the streamer heads. Figure 1 shows the front-end gear 30 to include lead-in cables 32 connected between the vessel 10 and deflectors 34. A deflector 34 is a structure capable of generating the necessary lift when towed to keep the streamers deployed in the transverse direction with respect to the sailing line of the towing vessel 10. Spacer lines 36 are provided between the streamers 12 for obtaining a substantially linear profile for the position of the streamer heads.

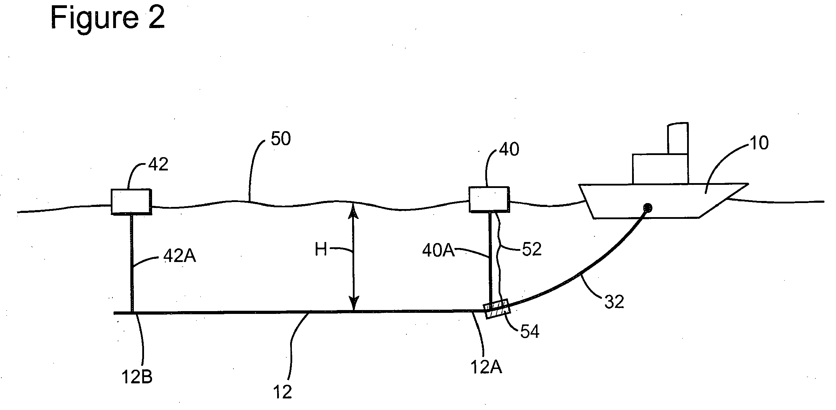

For maintaining the streamers 12 substantially parallel relative to a reference plane (e.g., the water surface), as shown in Figure 2, traditionally, a head-buoy 40 is connected to a head portion 12A of the streamer 12 and a tail-float 42 is connected at a tail portion 12B of the streamer 12. The head-buoy and tail-float provide flotation to the streamer even if the streamer is buoyant neutral. The head-buoy and tail-float are configured to float at the water surface 50 and corresponding cables 40A and 42A (for mechanical purposes) connect these elements to the streamer to maintain the streamer at the desired depth H.

The head-buoy 40 is equipped with various equipment, e.g., acoustic equipment for detecting positions of neighboring streamers and global positioning system (GPS) equipment for determining an absolute position of the streamer. In order to power the equipment, electric power generated on the towing vessel may be transferred through an electric cable 52 to the head-float 40. The electric cable 52 and the cable 40A connect to the streamer 12 through a connection device 54.

From time to time, maintenance is required on the head-float because its equipment requires constant checks. Such maintenance may be performed while the head-buoy is deployed in the water, i.e., during a seismic survey. Such environment makes the working conditions difficult for the maintenance personnel due to, e.g., large waves, moving equipment, humid environment, etc. Also, the maintenance may be time-consuming because the environmental conditions are not appropriate.

Having the streamer spread deployed underwater and the seismic survey stopped for head-buoy maintenance is highly undesirable because the cost of the streamer spread is high. Thus, it would be desirable to provide systems and methods that avoid the afore-described problems and drawbacks, i.e., simplify and/or expedite the maintenance of the head-float.

### SUMMARY

According to one exemplary embodiment, there is a streamer head-float system connected to a head portion of a streamer or to a lead-in according to subject-matter of claim 1. The system includes: (A) a head-buoy configured to float in water and connected through a cable to the head portion of the streamer or to the lead-in, (B) a head-float configured to float in water, (C) a connector connecting the head-float to the head-buoy, and, (D) positioning equipment on the head-float and configured to determine a position of the streamer.

In a further exemple, there is a head-float associated with a head portion of a streamer or a lead-in towed underwater. The head-float includes (A) a body configured to float in water, (B) a connector connecting the head-float to a head-buoy, and (C) positioning equipment attached to the head-float and configured to determine a position of the streamer or a position of a source. The head-float does not provide floatation to the streamer.

According to another exemplary embodiment, there is a method for performing a seismic survey. The method includes (A) towing a streamer, (B) connecting a head-buoy to a head portion of the streamer or to a lead-in, and (C) towing with the head-buoy a head-float configured to float in water. The method further includes determining a position of the streamer with positioning equipment attached to the head-float.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a traditional seismic survey;
Figure 2 is a side view of a streamer when deployed underwater;
Figure 3 is a schematic diagram of a head-float system that includes primary and head-floats according to an exemplary embodiment;
Figure 4 is a cross-section of a cable;
Figure 5 is a schematic diagram of primary and head-floats according to an exemplary embodiment;
Figure 6 is a schematic diagram of a connector between primary and head-floats according to an exemplary embodiment;
Figure 7 is a schematic diagram of another connector between primary and head-floats according to an exemplary embodiment;
Figure 8 is a schematic diagram of a spread having one or more head-buoys according to an exemplary embodiment;
Figure 9 is a flowchart of a method for towing primary and head-floats according to an exemplary embodiment;
Figure 10 is a flowchart of a method for replacing a head-float according to an exemplary embodiment;
Figure 11 is a schematic diagram of a head-buoy connected to a seismic source;
Figure 12 is a schematic diagram of a head-buoy having a hydro-generator and a protective grid according to an exemplary embodiment;
Figure 13 is a schematic diagram of another head-buoy having a hydro-generator and a protective grid according to an exemplary embodiment;
Figure 14 is a schematic diagram of still another head-buoy having a hydro-generator and a protective grid according to an exemplary embodiment;
Figure 15 is a schematic diagram of a head-buoy having a rotatable hydro-generator according to an exemplary embodiment; and
Figure 16 is a schematic diagram of a computing device.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a head-float that is connected to a head-buoy.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment, a head portion of a streamer is attached by a cable to a head-buoy for providing floatability. A head-float is detachably attached to the head-buoy. The head-float is not intended to provide floatability to the streamer. In one application, there is no direct connection between the head-float and the streamer. Various equipment (e.g., acoustic, GPS, etc.) that is traditionally on the head-buoy is now moved in the head-float. The head-buoy still provides floatability for the streamer. When maintenance of the equipment is necessary, because the equipment is now on the head-float and not on the head-buoy, the head-float may be disconnected from the head-buoy and replaced with a working head-float.

Thus, the maintenance operations are essentially moved from the sea to the vessel because the head-float may be towed to the vessel and there the maintenance may be performed while the seismic survey is not interrupted. Thus, the down-time of the seismic survey is reduced by using the novel embodiment. The reduced down-time may include the time for sending a boat with maintenance personnel to the head-float, disconnecting the head-float from the head-buoy, attaching a new head-float to the head-buoy, and retrieving the head-float on the vessel. However, the reduced down-time does not include the time necessary for replacing or fixing the equipment in the head-float.

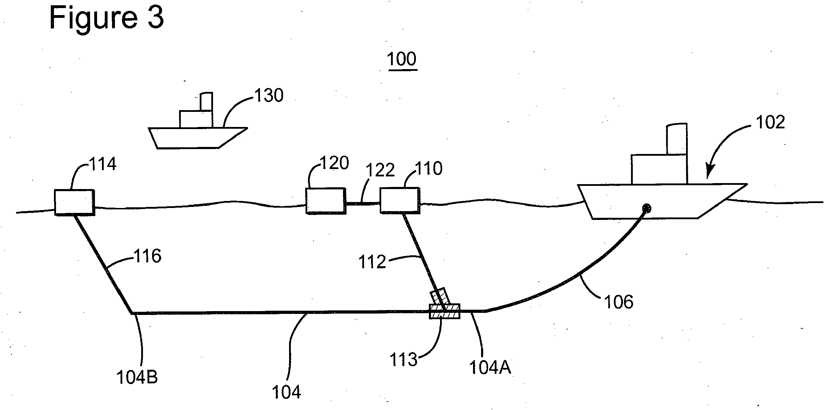

The novel features are now discussed in more detail with regard to a few exemplary embodiments. According to an exemplary embodiment illustrated in Figure 3, a seismic survey system 100 includes a towing vessel 102 and at least one streamer 104. The streamer 104 is connected to the towing vessel 102 with a front-end gear 106 (e.g., a lead-in that connects the streamer to the vessel). A head-buoy 110 is attached with a cable 112 (that may include both a cable or chain to provide mechanical strength and a cable to provide electrical and/or data transfer) to a connecting part 113 at a front portion 104A of the streamer 104, and a tail float 114 is attached with a cable 116 to a tail portion 104B of the streamer. Cable 112 may be attached to the lead-in 106 instead of the front portion 104A of the streamer and thus, the connecting part 113 may be between the streamer and the lead-in 106. In addition, a head-float 120 is attached through a connection 122 to the head-buoy 110. The connection 122 may be a detachable connection, as discussed later, so that maintenance personnel may easily detach the head-float from the head-buoy while on the sea. In one application, the connection may be remotely controlled from a maintenance boat 130 so that by simply pressing a button on the remote control, the head-float detaches by itself from the head-buoy. In another application, the connection is not detachable, i.e., it is fixed.

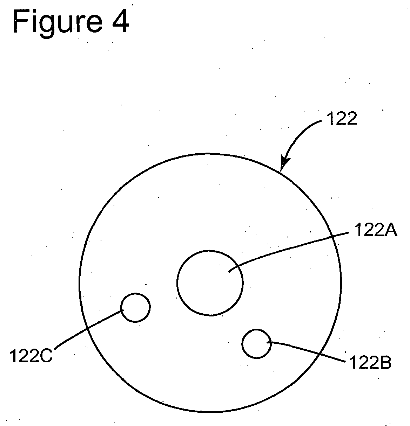

As illustrated in Figure 4, the connection 122 may include a cable 122A configured to withstand the tension present in the connection 122. Cable 122A may be distributed as a single cable as shown in Figure 4 or it may be distributed inside or outside the connection 122 in various strands. A data communication cable 122B may also be provided through the connection 122 for supporting data transmission between the head-float and the head-buoy or the streamer. An electric power cable 122C may also be provided through the connection 122 for transmitting electric power between the head-float and the head-buoy.

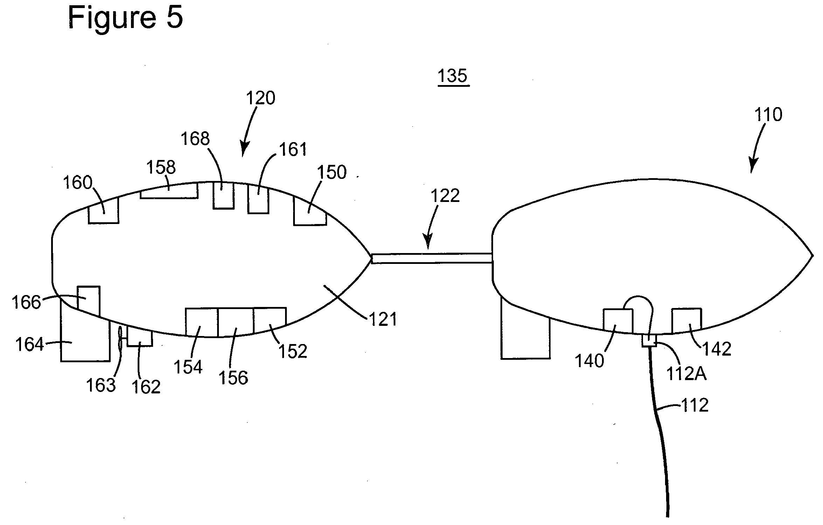

In one exemplary embodiment illustrated in Figure 5, a streamer head-float system 135 includes a head-buoy 110 connected to a head-float 120. It is noted that the head-float 120 is discussed herein in the context of being attached to the head-buoy 110 of a streamer. However, the novel features of the head-float may also be applied to a head-float attached to a seismic source or another seismic device or element, for example, a tail buoy, a deflector or a lead-in. The head-buoy 110 has no GPS or acoustic equipment because this equipment is moved onto the head-float 120. However, in another exemplary embodiment, the head-buoy 110 may include one or more of this equipment. The head-buoy 110 may have an actuator 112A for adjusting a length of the cable 112 (connected to the streamer) and no other equipment. This is a minimal equipment configuration for the head-buoy 110. In another application, the head-buoy 110 may include a battery 140 for powering the actuator 112A. The actuator 112A may be, for example, a winch. The actuator 112A is used to control the length of the cable 112, and thus, to control a depth of the streamer (not shown) attached to the cable 112.

Further, in another application, a control device 142 may be provided inside the head-buoy. The control device 142 may be configured to receive data from the streamer 104, through the cable 112, or wireless from the towing vessel 102, for controlling a depth position of the streamer. Thus, in this last exemplary embodiment, the head-buoy 110 is capable of adjusting a depth position of the streamer or lead-in independent of the presence or not of the head-float.

The head-float 120 has a body 121 that is configured to house one or more positioning devices for determining the position of the streamer relative to other streamers and/or its absolute position. Such positioning devices may include a GPS (or other similar device that uses the air as medium) system 150, which provides an absolute position relative to earth, and/or an acoustic system (or other systems for determining relative positions of other streamers and which uses the water as medium, a passive acoustic monitoring system) 152, which provides a relative position of the buoy to the streamers or a position of one streamer to another streamer. In one application, the GPS system 150 is provided on top of the head-float while the acoustic system 152 is provided on the bottom of the head-float. Although Figure 5 shows these devices provided inside the head-float, it is noted that these devices may be partially or totally provided on the outside of the head-float. Further devices and/or systems may be provided on and/or in the head-float as now discussed.

For example, a battery 154 may be provided inside the head-float for powering the GPS and acoustic systems. Optionally, if the head-buoy 110 does not have an electric power source or cannot receive electrical power directly from the streamer, the battery 154 may provide electrical power to the actuator 112A through the connection 122. A controller 156 (e.g., a processor and/or a memory) may be provided for controlling/coordinating the GPS, acoustic systems, battery and other equipment on the head-float, e.g., for deciding when to recharge the battery. The battery 154 may be charged with a solar panel 158 provided on a top portion of the float, or a fuel cell 160, or with a generator (or hydro-generator) 162 that has a propeller 163 that is rotated when the head-float is towed by the vessel, or by a device that harvests the energy of the ocean waves, or by a combination of these devices. Therefore, for this exemplary embodiment, no power cable is necessary from the streamer to the head-buoy 110 and through the connection 122 to the head-float 120. Thus, for this configuration, the cable 112 does not include a cable to transmit power and/or data. Still for this embodiment, a data transmitting device 161 may be provided for exchanging data with the vessel. The data transmitting device 161 may be an acoustic modem or radio device that communicates with a corresponding device and a server or computing device of the vessel. The data transmitting device 161 may be used to communicate, in real time, with the vessel to share the positions of the streamers (absolute and relative positions acquired with GPS 150 and acoustic system 152). In this way, the streamers may be positioned as desired. In this regard, it is noted that a central control device on the vessel may instruct birds attached to the streamers to position the streamers based on the data collected by the GPS 150 and/or the acoustic system 152. In another application, a power/data cable may be connected between the streamer and the head-float.

The head-float 120 may also include one or more fins 164 for controlling the direction of the head-float. The fin may be connected to an actuator 166, for example, an electric motor, for adjusting an orientation of the fin. The fin may be disposed vertically or horizontally or to make a desired angle with the body of the head-float. Other equipment may be added to the head-float as would be recognized by those skilled in the art.

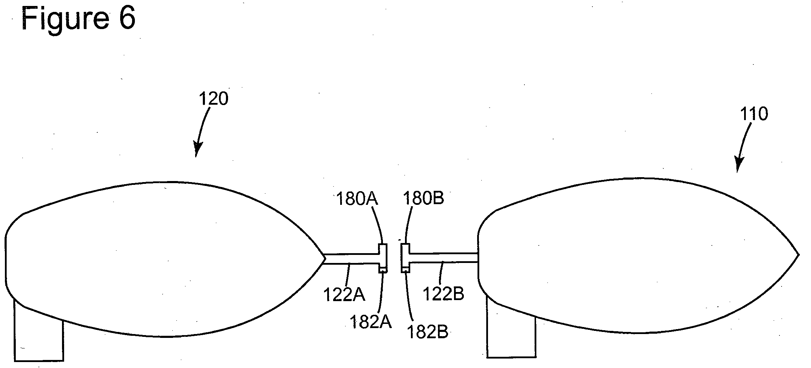

Returning to the connector 122, it is noted that there are various possibilities for connecting the head-buoy 110 to the head-float 120. For example, as illustrated in Figure 6, the connector 122 may have a first portion 122A that is fixedly attached to the head-float 120, and a second portion 122B that is fixedly attached to the head-buoy 110. Each portion of the connector 122 may have a corresponding male or female portion 180A and 180B for achieving the electrical and/or mechanical connection of the portions 122A and 122B. In one application, the male and female connection portions 180A and 180B may be provided with electric devices 182A and 182B that may be remotely disconnected from each other. In one application, existing head-buoys are retrofitted with the connection portion 180B so that a head-float may be attached to the head-buoy when, for example, the head-buoy has maintenance problems. As noted above, when the head-float is attached to the head-buoy, the head-float may provide electrical power or data communication capabilities to the head-buoy, especially if the head-buoy has failed with one or more of these functions.

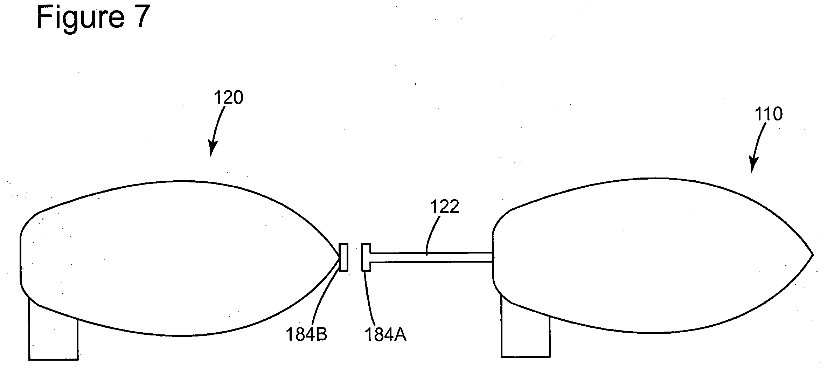

In another exemplary embodiment illustrated in Figure 7, the entire connector 122 is attached to the head-buoy 110, and the free end of the connector 122 has a male or female part 184A that connects to a corresponding part 184B attached to the head-float 120. It is also possible that the entire connector 122 is connected to the head-float 120, and the head-buoy 110 has a male or female part for connecting to the connector 122.

The body 121 of the head-float may be made of a material that is resistant to humid and corrosive environments, for example, plastic, composite, aluminum, stainless steel, etc. The body may be made to have a cavity inside which all or part of the equipment may be provided. An access door may be provided to the cavity to access the equipment for maintenance and to protect it from water droplets.

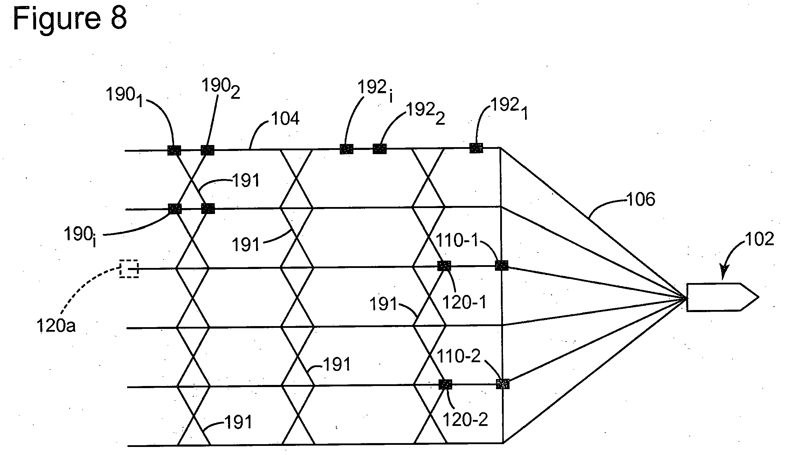

Regarding the positioning of the streamer 104 according to the requirements of the seismic survey, it is shown in Figure 8, a bird view of the plural streamers 104 being towed by the vessel 102. As an example, two head-buoys 110-1 and 110-2 are shown connected to the head of corresponding streamers. Figure 8 also shows two head-floats 120-1 and 120-2 similar to those discussed with regard to Figures 3-7. The head-floats may include a GPS system, a local positioning system, a data transmission system for exchanging data with the vessel and a power source. Figure 8 also shows multiple acoustic transceivers 190ᵢ that are configured to send acoustic signals 191 to other transceivers, located on the streamers and/or the other head-floats, and to determine the positions of the streamers relative to each other. Having determined the absolute positions of the two head-floats (using the GPS system 150) and the positions of the streamers relative to the head-floats (using the local positioning system 152), the controller on the vessel can calculate/determine the actual positions of the streamers and may instruct accordingly the birds 192ᵢ (distributed along one or more streamers) to adjust the positions of the streamers to follow the predefined path.

It is noted that in one exemplary embodiment, only one head-float may be used to determine the absolute location of the streamers relative to the earth. However, with only one head-float, the entire streamer arrangement may turn around the head-float, thus, making the location of the streamer arrangement inaccurate. To prevent this situation, at least two head-floats equipped with the GPS system, local positioning system and the data communication system may be used as shown in Figure 8. For an improved accuracy, one or more tail-floats 120a, similarly equipped as the head-floats, may be provided toward a tail portion of the streamers. According to still another exemplary embodiment, instead of, or in addition to, the local positioning system 152, a ultra short base line (USBL) system 168 (as shown in Figure 5) may be used to determine the position of the streamers relative to each other and/or to the head-float. A master or base of the USBL may be mounted on one or more head-buoys (or one the vessel) while the pingers may be mounted on one or more streamers, on the source, on the deflectors or on any other equipment at sea, underwater, above water, etc.

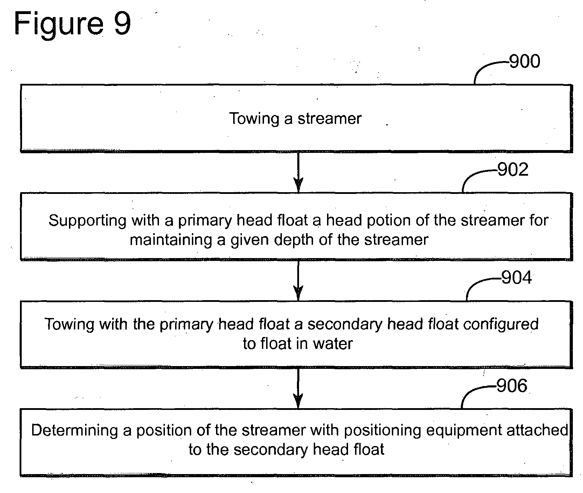

The head-float and the head-buoy may be used to perform a seismic survey as discussed next. According to an exemplary embodiment illustrated in Figure 9, a method for performing a seismic survey includes a step 900 of towing a streamer, a step 902 of supporting with a head-buoy a head portion of the streamer or a lead-in, a step 904 of towing with the head-buoy a head-float configured to float in water, and a step 906 of determining a position of the streamer with positioning equipment attached to the head-float. The head-buoy may be free of any positioning equipment.

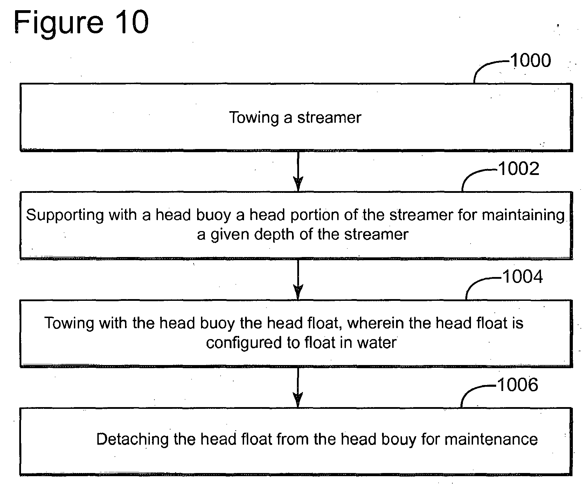

According to another exemplary embodiment illustrated in Figure 10, there is a method for replacing a head-float while being deployed on the water for a marine seismic survey. The method includes a step 1000 of towing a streamer, a step 1002 of supporting with a head-buoy a head portion of the streamer or a lead-in, a step 1004 of towing with the head-buoy the head-float, wherein the head-float is configured to float in water, and a step 1006 of detaching the head-float from the head-buoy for maintenance. Alternatively, the step 1006 may include moving the head-float (if the head-float is small enough) on the maintenance vessel without detaching it from the head-buoy.

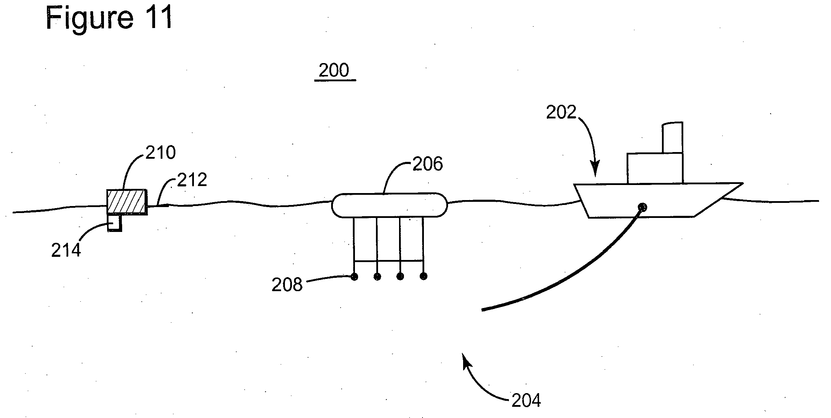

The above embodiments have been discussed with regard to providing at least a head-float next to a head-buoy that is connected to a streamer. However, the novel embodiments are equally applicable to a head-buoy connected to a seismic source, as illustrated in Figure 11. Other possibilities include attaching the head-float to a deflector (or paravan) to monitor the position of the deflector, thus helping monitoring the streamers, or adding the head-float to a slider that slides along a wide-tow or to a prepositioned attachment on the wide-tow. The deflectors are known in the art for being used to, e.g., space the heads of the streamers apart from each other.

The system 200 in Figure 11 shows a vessel 202 that tows a seismic source 204. The seismic source 204 may include multiple sub-arrays, one sub-array having a float 206 and plural guns 208. A head-float 210, similar to the one discussed in the previous embodiments, is attached through a connection 212 to the float 206. For this embodiment, the head-float 210 may include an acoustic system 214 for providing a more accurate position of the seismic source or other equipment attached to the source or around the source. The acoustic system 214 may be an ultra short base line (USBL) device that is capable of acoustic positioning an underwater object. The acoustic system 214 may also be provided on the head-float 120.

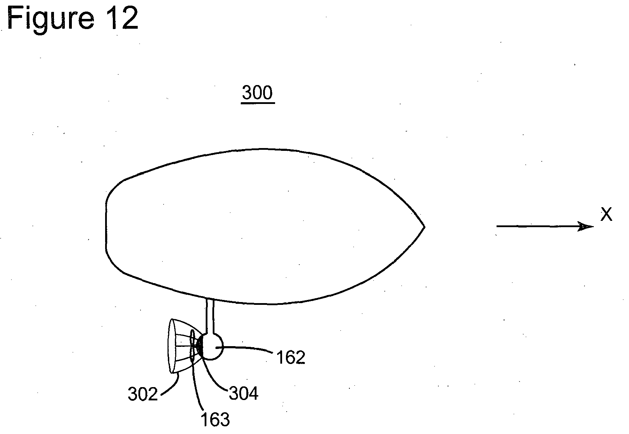

The hydro-generator 162 and its novel features are now discussed with regard to Figure 12. Figure 12 shows a head-float 300 that may have all or part of the components discussed with regard to the head-float 120. For simplicity, Figure 12 only shows the hydro-generator 162 and its propeller 163. However, it is possible to have more than one hydro-generator. For example, in one embodiment, the head-float has two generators symmetrically located on the body of the head-float and the propellers of the two hydro-generatos may be configured to rotate in opposite directions to reduce/eliminate a resulting torque on the head-float. It is noted that if the head-float advances along axis X, the propeller 163 may be behind the hydro-generator as shown in the figure or in front of the hydro-generator. A protection grid 302 may be added to the hydro-generator 162 to enclose the propeller 163 for protecting it from debris, marine animals (e.g., sea turtles), etc. The protection grid 302 may be manufactured to have openings sized to be smaller than a size of the animals and/or debris to be avoided. In another embodiment, the shape of the protection grid 302 is made to promote the debris and/or animals to slide past it (e.g., aerodynamic shape). In still another exemplary embodiment, an attachment mechanism 304 may be used to attach the protection grid 302 to the hydro-generator 162 and the attachment mechanism 304 may be configured to rotate relative to the hydro-generator 162. In this way, the controller 156 may instruct the attachment mechanism 304 to rotate to clean the protection grid 302. The attachment mechanism may be activated by its own motor powered by the battery of the head-float, the hydro-generator or by both of them.

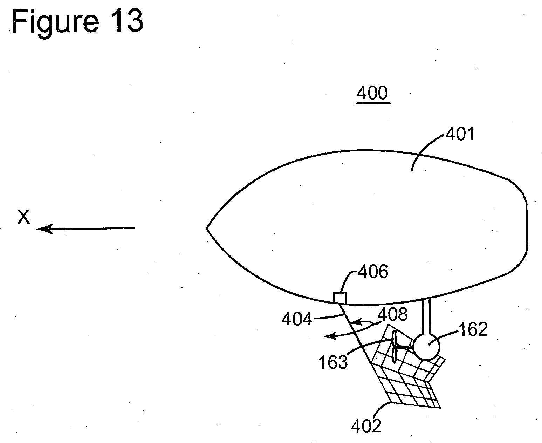

In another embodiment illustrated in Figure 13, a head-float 400 has a protection grid 402 that is located in front of the impeller 163 when advancing along the traveling direction X. The protection grid 402 may be attached through a portion 404 to the body 401 of the head-float 400. In one application, a motor 406 is provided inside the head-float 400 and attached to the portion 404 for rotating back and forth the protection grid 402. The motor 406 may rotate the protection grid along arrow 408. In one application, the motor may rotate the protection grid 402 by 10 degrees (other angles may be used) in each direction. In this way, the protection grid may be cleaned.

Further, the portion 404 may prevent debris and/or marine animals to get trapped between the body 401 of the head-float and the hydro-generator 162. In one application, the portion 404 is a simple rod. However, in another application, the portion 404 is a mesh. The protection grid 402 may have different shapes. One example shown in Figure 13 includes two mesh surfaces (planar or curved) that are connected together at the portion 404. Other shapes for the protection grid may be used. In another application, the portion 404 does not contact the body 401 of the head-float 400. In this case, the protection grid may be attached to the hydro-generator, as already discussed above.

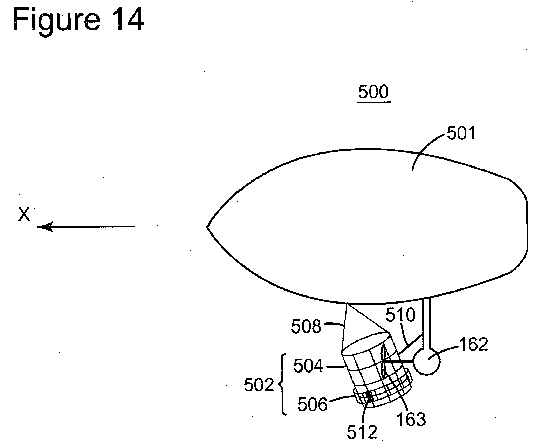

In still another embodiment illustrated in Figure 14, a protection grid 502 may be attached to the body 501 of the head-float 500 or to the hydro-generator. The protection grid 502 may include a stationary grid 504 that is physically attached to the body or to the hydro-generator, or to both, and a movable grid 506 provided in close proximity to the stationary grid 504. The stationary grid 504 may be attached to make an angle with the body of the head-float to promote removal of kelp, debris, etc. The movable grid 506 may be provided inside or outside the stationary grid 504. Figure 14 shows a single movable grid 506 for simplicity. However, more than one movable grid may be provided next to the stationary grid.

The movable grid 506 is configured to rotate relative to the stationary grid 504. Thus, the movable and stationary grids may have a cylindrical shape. One or more paddles 512 may be located on the movable grid 506 to generate the rotation motion under the water action. The movable grid 506 may be kept in place, next to the stationary grid 504 by various mechanisms, for example, each grid has a track that engages the other grid's track. More movable grids may be provided on the stationary grid to cover most of the stationary grid. However, the movable grids should be able to rotate without touching the hydro-generator. Figure 14 shows the protection grid 502 enclosing only the propeller. In another exemplary embodiment, the protection grid may be designed to also enclose the hydro-generator 162. The stationary grid 504 may be attached with an attachment 508 to the body 501 of the head-float. In another application, the stationary grid 504 may be attached with an attachment 510 to the hydro-generator 162. In still another exemplary embodiment, the stationary grid 504 may be attached to both the body of the head-float and the hydro-generator.

In still another embodiment, the controller 156 may be configured to monitor the power generated by the hydro-generator and when this power falls below a predetermined threshold (which indicates that debris or other things are reducing the flow of water to the propeller), to instruct the attachment mechanism 304 or the motor 406 to rotate the protection grid for cleaning purposes.

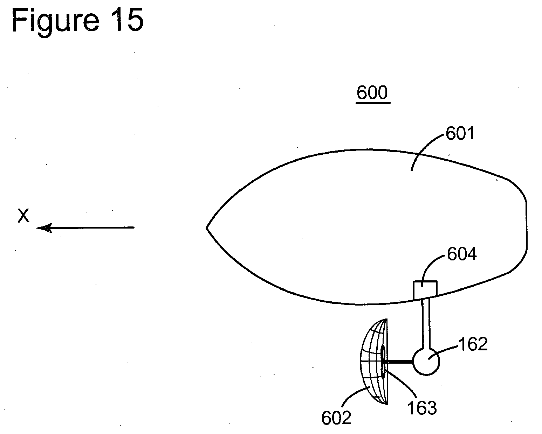

In yet another exemplary embodiment illustrated in Figure 15, a head-float 600 may have a protection grid 602 distributed around the impeller 163 of the hydro-generator 162. To move (rotate, translate or both) of the protection grid, which may be fixedly attached to the hydro-generator 162, the entire hydro-generator may be rotated by a motor 604 located inside the body 601 of the head-float 600. For all the above discussed embodiments, the controller 156 may coordinate the rotation of the protection grid, the measurement of the power generated by the hydro-generator, communication with the vessel, etc.

In still another exemplary embodiment, there is a head-float associated with a head portion of a streamer or a lead-in towed underwater. The head-float includes a body configured to float in water; a connector connecting the head-float to a head-buoy; and positioning equipment attached to the head-float and configured to determine a position of the streamer or a position of a source. The head-float does not provide floatation to the streamer. In one application, the head-buoy is free of any positioning equipment and the head-buoy is configured to connect through a cable to the head portion of the streamer or to the lead-in. In another application, the connector includes first and second connecting parts configured to disconnect from each other to separate the head-buoy from the head-float. The positioning equipment may include an acoustic system configured to determine a position of the streamer relative to adjacent streamers; and/or a global positioning system configured to determine an absolute position of the streamer. The head-float may further include a power supply configured to generate energy; and a data transmission device configured to exchange data with a vessel that tows the streamer. The power supply is configured to supply the head-buoy with power and there is no electric power cable between the streamer or the lead-in and the headbuoy. The head-float may include at least one fin for controlling a traveling direction.

In one application, the head-float is not directly attached to the streamer or the lead-in. The head-float may also include a hydro-generator configured to generate energy by rotating a propeller; and a protection grid for protecting the propeller from debris and/or marine animals. The protection grid is configured to move relative to a body of the head-float to clean the protection grid. The head-float may also include a controller for sensing a power produced by the hydro-generator and for controlling a movement of the protection grid based on the sensed power.

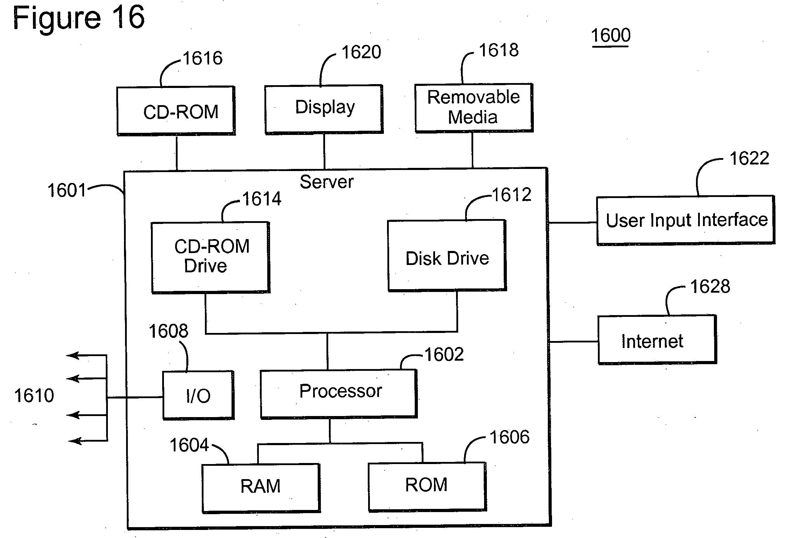

The methods discussed above may be implemented in dedicated devices (e.g., dedicated networks or computers or cloud-computing networks, etc.) for being performed. A combination of software and hardware may be used to achieve the event-related transversal isotropic axis and/or an associated tilt model. A dedicated machine that can implement one or more of the above-discussed exemplary embodiments is now discussed with reference to Figure 16.

An exemplary computing arrangement 1600 suitable for performing the activities described in the exemplary embodiments may include server 1601. Such a server 1601 may include a central processor (CPU) 1602 coupled to a random access memory (RAM) 1604 and to a read-only memory (ROM) 1606. The ROM 1606 may also be other types of storage media to store programs, such as programmable ROM (PROM), erasable PROM (EPROM), etc. The processor 1602 may communicate with other internal and external components through input/output (I/O) circuitry 1608 and bussing 1610, to provide control signals and the like. The processor 1602 carries out a variety of functions as are known in the art, as dictated by software and/or firmware instructions.

The server 1601 may also include one or more data storage devices, including hard and floppy disk drives 1612, CD-ROM drives 1614, and other hardware capable of reading and/or storing information such as DVD, etc. In one embodiment, software for carrying out the above-discussed steps may be stored and distributed on a CD-ROM 1616, removable media 1618 or other form of media capable of portably storing information. These storage media may be inserted into, and read by, devices such as the CD-ROM drive 1614, the disk drive 1612, etc. The server 1601 may be coupled to a display 1620, which may be any type of known display or presentation screen, such as LCD, plasma displays, cathode ray tubes (CRT), etc. A user input interface 1622 is provided, including one or more user interface mechanisms such as a mouse, keyboard, microphone, touchpad, touch screen, voice-recognition system, etc.

The server 1601 may be coupled to other computing devices, such as the landline and/or wireless terminals and associated applications, via a network. The server may be part of a larger network configuration as in a global area network (GAN) such as the Internet 1628, which allows ultimate connection to the various landline and/or mobile client/watcher devices.

As also will be appreciated by one skilled in the art, the exemplary embodiments may be embodied in a wireless communication device, a computer network, as a method or in a computer program product. Accordingly, the exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer-readable medium may be utilized including hard disks, CD-ROMs, digital versatile disc (DVD), optical storage devices, or magnetic storage devices such a floppy disk or magnetic tape. Other non-limiting examples of computer readable-media include flash-type memories or other known memories.

The disclosed exemplary embodiments provide a system and a method for reducing the down-time associated with equipment maintenance of a head-float. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A streamer head-float system (135) connected to a head portion (104A) of a streamer (104) or to a lead-in (106), the system comprising:
a head-buoy (110) configured to float in water and connected through a cable (112) to the head portion (104A) of the streamer (104) or to the lead-in (106) for providing floatability to the streamer (104);
a head-float (120) configured to float in water;
a connector (122) connecting the head-float (120) to the head-buoy (110); arid
positioning equipment (150, 152) on the head-float (120) and configured to determine a position of the streamer (104),
wherein the connector (122) includes first and second connecting parts (180A, 180B) configured to disconnect from each other to separate the head-buoy from the head-float, and
wherein the head-buoy further comprises an actuator device (112A) configured to actuate the cable (112) to adjust the given depth of the streamer.

2. The system of Claim 1, wherein both the head-buoy and the head-float are configured to float at the water surface and the connector (122) is a detachable connectors.

3. The system of Claim 1, wherein the head-buoy further comprises:
a battery (140) connected to the actuator device (112A) and configured to actuate the actuator device (112A).

4. The system of Claim 1, wherein the positioning equipment comprises:
an acoustic system (152) configured to determine a position of the streamer relative to adjacent streamers; and/or
a global positioning system (150) configured to determine an absolute position of the streamer.

5. The system of Claim 4, wherein the head-float further comprises:
a power supply (154, 158, 160) configured to generate energy; and
a data transmission device (161) configured to exchange data with a vessel that tows the streamer.

6. The system of Claim 5, wherein the power supply is one of a battery (154), a solar panel (158), a fuel cell (160), a wave energy converter, or a hydro-generator (162).

7. The system of Claim 1, wherein the head-float further comprises:
a hydro-generator (162) configured to generate energy by rotating a propeller (162); and
a protection grid (302, 402, 502, 602) for protecting the propeller from debris and/or marine animals.

8. The system of Claim 7, wherein the protection grid is configured to move relative to a body of the head-float to clean the protection grid.

9. The system of Claim 7, further comprising:
a controller (156) for sensing a power produced by the hydro-generator and for controlling a movement of the protection grid based on the sensed power.

10. The system of Claim 1, wherein the head-float is not directly attached to the streamer or the lead-in and the head-buoy (110) is free of any positioning equipment.

11. A method for performing a seismic survey with the system of claim 1, the method comprising:
towing the streamer (104);
connecting the head-buoy (110) to the head portion (104A) of the streamer (104) or to the lead-in (106);
towing with the head-buoy (110) the head-float (120) configured to float in water; and
determining a position of the streamer with the positioning equipment (150, 152) attached to the head-float (120).

12. The method of claim 11, whereby for replacing the head-float (120) while being deployed on the water for a marine seismic survey,
the head-float (120) is detached from the head buoy (110) for maintenance.

## Patentansprüche

1. Streamer-Kopfschwimmkörpersystem (135), verbunden mit einem Kopfabschnitt (104A) eines Streamers (104) oder eines Einlaufs (106), wobei das System Folgendes umfasst:
ein Kopfboje (110), die konfiguriert ist, um in Wasser zu schwimmen, und über ein Kabel (112) mit dem Kopfabschnitt (104A) des Streamers (104) oder mit dem Einlauf (106) zur Bereitstellung von Schwimmfähigkeit an den Streamer (104) verbunden ist;
einen Kopfschwimmkörper (120), der konfiguriert ist, um in Wasser zu schwimmen;
einen Verbinder (122), der den Kopfschwimmkörper (120) mit der Kopfboje (110) verbindet; und eine Positionierungsausrüstung (150, 152) auf dem Kopfschwimmkörper (120) und konfiguriert, um eine Position des Streamers (104) zu bestimmen,
wobei der Verbinder (122) erste und zweite Verbindungsteile (180A, 180B) umfasst, die konfiguriert sind, um sich voneinander abzukuppeln, um die Kopfboje vom Kopfschwimmkörper zu trennen, und
wobei die Kopfboje weiter eine Betätigungsvorrichtung (112A) umfasst, die konfiguriert ist, um das Kabel (112) zu betätigen, um die bestimmte Tiefe des Streamers einzustellen.

2. System nach Anspruch 1, wobei sowohl die Kopfboje als auch der Kopfschwimmkörper konfiguriert sind, um auf der Wasseroberfläche zu schwimmen, und der Verbinder (122) ein entfernbarer Verbinder ist.

3. System nach Anspruch 1, wobei die Kopfboje weiter Folgendes umfasst:
eine Batterie (140), die mit der Betätigungsvorrichtung (112A) verbunden und konfiguriert ist, um die Betätigungsvorrichtung (112A) zu betätigen.

4. System nach Anspruch 1, wobei die Positionierungsvorrichtung Folgendes umfasst:
ein akustisches System (152), das konfiguriert ist, um eine Position des Streamers mit Bezug auf benachbarte Streamer zu bestimmen; und/oder
ein globales Positionierungssystem (150), das konfiguriert ist, um eine absolute Position des Streamers zu bestimmen.

5. System nach Anspruch 4, wobei: die Kopfschwimmkörper weiter Folgendes umfasst:
eine Stromversorgung (154, 158, 160), die konfiguriert ist, um Energie zu erzeugen; und
eine Datenübertragungsvorrichtung (161), die konfiguriert ist, um Daten mit einem Schiff auszutauschen, das den Streamer schleppt.

6. System nach Anspruch 5, wobei die Stromversorgung eines einer Batterie (154), einer Solarzellenplatte (158), eine Brennstoffzelle (160), eines Wellenenergieumwandlers oder eines Wasserkraftgenerators (162) ist.

7. System nach Anspruch 1, wobei der Kopfschwimmkörper weiter Folgendes umfasst:
einen Wasserkraftgenerator (162), der konfiguriert ist, um Energie durch das Drehen eines Propellers (162) zu erzeugen; und
ein Schutzgitter, (302, 402, 502, 602), um den Prpeller vor Schwemmgut und/oder Meerestieren zu schützen.

8. System nach Anspruch 7, wobei das Schutzgitter konfiguriert ist, um sich mit Bezug auf einen Körper des Kopfschwimmkörpers zu bewegen, um das Schutzgitter zu reinigen.

9. System nach Anspruch 7, weiter umfassend:
eine Steuervorrichtung (156), um eine Kraft zu messen, die vom Wasserkraftgenerator erzweugt wird, und um eine Bewegung des Schutzgitters basierend auf der gemessenen Kraft zu steuern.

10. System nach Anspruch 1, wobei der Kopfschwimmkörper nicht direkt an den Streamer oder den Einlauf befestigt ist und die Kopfboje (110) frei von jeder Positionierungsausrüstung ist.

11. Verfahren zur Durchführung einer seismischen Überwachung mit dem System nach Anspruch 1, wobei das Verfahren Folgendes umfasst:
Schleppen des Streamers (104);
Verbinden der Kopfboje (110) mit dem Kopfabschitt (104A) des Streamers (104) oder mit dem Einlauf (106);
Schleppen mit der Kopfboje (110) des Kopfschwimmkörpers (120), der konfuiguriert ist, um in Wasser zu schwimmen; und
Bestimmen einer Position des Streamers mit der Positionierungsausrüstung (150, 152), die an den Kopfschwimmkörper (120) befestigt ist.

12. Verfahren nach Anspruch 11, wobei zum Ersetzen des Kopfschwimmkörpers (120), während er auf dem Wasser für eine seismische Meeresüberwachung eingesetzt wird,
der Kopfschwimmkörper (120) von der Kopfboje (110) zur Wartung entfernt wird.

## Revendications

1. Système de flotteur de tête de flute marine (135) raccordé à une partie de tête (104A) d'une flute marine (104) ou à une tête (106), le système comprenant :
une bouée de tête (110) configurée pour flotter dans l'eau et raccordée par le biais d'un câble (112) à la partie de tête (104A) de la flute marine (104) ou à la tête (106) pour fournir la flottabilité à la flute marine (104) ;
un flotteur de tête (120) configuré pour flotter dans l'eau ;
un connecteur (122) raccordant le flotteur de tête (120) à la bouée de tête (110) ; et
un équipement de positionnement (150, 152) sur le flotteur de tête (120) et configuré pour déterminer une position de la flute marine (104),
dans lequel le connecteur (122) comprend des première et seconde parties de raccordement (180A, 180B) configurées pour se déconnecter afin de séparer la bouée de tête du flotteur de tête, et
dans lequel la bouée de tête comprend en outre un dispositif d'actionneur (112A) configuré pour actionner le câble (112) afin d'ajuster la profondeur donnée de la flute marine.

2. Système selon la revendication 1, dans lequel à la fois la bouée de tête et le flotteur de tête sont configurés pour flotter sur la surface de l'eau et le connecteur (122) est un connecteur détachable.

3. Système selon la revendication 1, dans lequel la bouée de tête comprend en outre :
une batterie (140) raccordée au dispositif d'actionneur (112A) et configurée pour actionner le dispositif d'actionneur (112A).

4. Système selon la revendication 1, dans lequel le dispositif de positionnement comprend :
un système acoustique (152) configuré pour déterminer une position de la flute marine par rapport aux flutes marines adjacentes ; et/ou
un système de positionnement global (150) configuré pour déterminer une position absolue de la flute marine.

5. Système selon la revendication 4, dans lequel le flotteur de tête comprend en outre :
une alimentation d'énergie (154, 158, 160) configurée pour générer de l'énergie ; et
un dispositif de transmission de données (161) configuré pour échanger des données avec un bâtiment qui remorque la flute marine.

6. Système selon la revendication 5, dans lequel l'alimentation d'énergie est l'un parmi une batterie (154), un panneau solaire (158), une pile à combustible (160), un convertisseur d'énergie des vagues, ou un hydrogénérateur (162).

7. Système selon la revendication 1, dans lequel le flotteur de tête comprend en outre :
un hydrogénérateur (162) configuré pour générer de l'énergie en faisant tourner une hélice (162) ; et
une grille de protection (302, 402, 502, 602) pour protéger l'hélice des débris et/ou des animaux marins.

8. Système selon la revendication 7, dans lequel la grille de protection est configurée pour se déplacer par rapport à un corps du flotteur de tête afin de nettoyer la grille de protection.

9. Système selon la revendication 7, comprenant en outre :
un organe de commande (156) pour détecter une puissance produite par l'hydrogénérateur et pour commander un mouvement de la grille de protection en fonction de l'énergie détectée.

10. Système selon la revendication 1, dans lequel le flotteur de tête n'est pas directement fixé à la flute marine ou à la tête et la bouée de tête (110) est dépourvue de tout équipement de positionnement.

11. Procédé pour réaliser une étude sismique avec le système selon la revendication 1, le procédé comprenant les étapes consistant à :
remorquer la flute marine (104) ;
raccorder la bouée de tête (110) à la partie de tête (104A) de la flute marine (104) ou à la tête (106) ;
remorquer, avec la bouée de tête (110), le flotteur de tête (120) configuré pour flotter dans l'eau ; et
déterminer une position de la flute marine avec l'équipement de positionnement (150, 152) fixé au flotteur de tête (120).

12. Procédé selon la revendication 11, moyennant quoi pour remplacer le flotteur de tête (120) tout en étant déployé sur l'eau pour une étude sismique marine, le flotteur de tête (120) est détaché de la bouée de tête (110) pour l'entretien.
